# EUROPÄISCHE PATENTSCHRIFT

(11) **EP 1 635 172 B1**
(45) Veröffentlichungstag und Bekanntmachung des Hinweises auf die Patenterteilung: **08.07.2009**
(21) Anmeldenummer: 05017920.9
(22) Anmeldetag: 18.08.2005
(51) Int. Cl.: G01N 29/28, G01N 29/265, B61K 9/10

(54) **Ultraschallprüfvorrichtung und Ultraschallprüfverfahren mit abschmelzbarem Koppelmittel**
Ultrasound apparatus and method with a meltable coupling means
Appareil et procédé ultrasonore avec un moyen de contact fusible

(30) Priorität: 11.09.2004 DE 102004044071
(43) Veröffentlichungstag der Anmeldung: 15.03.2006
(73) Patentinhaber: intelligeNDT Systems & Services GmbH, 91052 Erlangen (DE)
(72) Erfinder: Engl, Guenter, 91052 Erlangen (DE); Meier, Rainer, 91058 Erlangen (DE)
(74) Vertreter: Mörtel & Höfner

(56) Entgegenhaltungen:
- FR-A- 2 752 939
- JP-A- 429 056
- US-A- 4 593 569
- PATENT ABSTRACTS OF JAPAN Bd. 016, Nr. 197 (P-1350), 12. Mai 1992 (1992-05-12) -& JP 04 029056 A (ISHIKAWAJIMA KENSA KEISOKU KK; others: 02), 31. Januar 1992 (1992-01-31)
- NESVIJSKI E.G.: "Dry Point Transducers: Design for New Applications" NDT.NET, [Online] Bd. 9, Nr. 09, September 2003 (2003-09), XP002358242 Gefunden im Internet: URL:http://www.ndt.net/article/v08n09/nesv i/nevsi.htm> [gefunden am 2005-12-08]

## Beschreibung

Die Erfindung betrifft eine Ultraschallprüfvorrichtung und ein entsprechendes Ultraschallprüfverfahren.

Ultraschallprüfvorrichtungen und entsprechende Verfahren werden benutzt, um zu untersuchende Objekte, also Prüflinge mit Hilfe von Ultraschall zu untersuchen bzw. zu überprüfen. Als Prüflinge kommen hierbei Objekte verschiedenster Art in Frage, von z.B. Kleinbauteilen wie Schrauben oder Bolzen im Rahmen einer Endkontrolle einer Fertigung bis hin zu Wartungsprüfungen an Überland über Hunderte von Kilometern verlegten Rohrleitungen oder Gleisschienen.

Bei der Ultraschallprüfung erfolgt stets die Ankopplung einer Ankoppelfläche eines Ultraschallprüfkopfes an eine Oberfläche des zu untersuchenden Prüflings. Zur Ankopplung wird hierbei ein Koppelmedium verwendet wie z.B. Gel, Öl oder Wasser. Vor allem bei der Verwendung flüssiger Koppelmedien in Verbindung mit komplizierten, unregelmäßigen Oberflächengeometrien am Prüfling und großen Ultraschallprüfköpfen fließt oft eine große Menge Koppelmedium in die Umgebung des Prüflings ab.

Bei der Ultraschallprüfung von sich Überland erstreckenden Prüflingen muss deshalb mit der Prüfvorrichtung eine erhebliche Menge Koppelmedium mitgeführt werden, welches bei der Ultraschallprüfung außerdem in großen Mengen in die Umwelt gelangt. Aus chemischen, umwelttechnischen und Kostengründen scheiden Koppelmedien höherer Viskosität, wie z.B. Gele, Pasten oder Öle aus und somit kommt als Koppelmedium bei derartigen Anwendungen meist nur Wasser in Frage.

Herkömmliche Ankopplungsmethoden wie Kontakttechnik mit Wasserankopplung und Bubblertechnik mit Wasserstrahl versagen bei ungleichmäßiger, veränderlicher Koppelfläche bzw. Oberfläche wegen des hohen Wasserverbrauchs infolge der geringen Viskosität von Wasser als Koppelmedium und dem damit verbundenen hohen Abfluss an Wasser. Vor allem bei hohen Prüfgeschwindigkeiten kann es darüber hinaus zu einem Abriss des Wasserfilms zwischen Prüfkopf und Prüfling kommen.

Aufgrund der oben genannten Schwierigkeiten sind bisher die Prüfgeschwindigkeiten begrenzt und es muss ein erhebliches Vorratsvolumen an Wasser mitgeführt werden. Bei komplexeren Oberflächenformen des Prüflings, an denen der Prüfkopf anzukoppeln ist, versagen herkömmliche Ankoppelmethoden gänzlich. Hier muss auf Ersatzmethoden geringerer Erkennbarkeit oder höheren Aufwandes oder auf erheblich geringere Prüfgeschwindigkeiten zurückgegangen werden.

Aus der JP 04 029056 A ist es bekannt, zur Durchführung von Ultraschallprüfungen Glaspuder, welches bei normaler Umgebungstemperatur fest ist, für hohe Prüftemperaturen bis zu 700°C auf dem hochtemperiert zu testenden Material zu verflüssigen, bevor die Ultraschallprüfung beginnt, so dass sich ein während der Ultraschallprüfung flüssiges Koppelmedium ergibt, welches sich auch bei hohen Temperaturen nicht zersetzt, aufkocht oder ungeeignete Viskosität aufweist.

Aufgabe der vorliegenden Erfindung ist es, eine verbesserte Ultraschallprüfvorrichtung und ein verbessertes entsprechendes Ultraschallprüfverfahren anzugeben.

Hinsichtlich der Vorrichtung wird die Aufgabe gelöst durch eine Ultraschallprüfvorrichtung mit einem eine Schallankoppelfläche aufweisenden Ultraschallprüfkopf. Der Ultraschallprüfkopf ist auf eine Oberfläche eines Prüflings ausgerichtet und entlang der Oberfläche verfahrbar. Zwischen der Schallankoppelfläche und der Oberfläche ist ein Koppelkörper angeordnet, welcher zusammen mit dem Ultraschallprüfkopf verfahrbar ist.

An der Schallankoppelfläche und der Oberfläche ist der Koppelkörper zu einem flüssigen Koppelmedium abschmelzbar.

Der Koppelkörper weist hierbei einen Aggregatzustand auf, der gegenüber dem flüssigen Zustand höhere Viskosität besitzt. Durch die Abschmelzung des Koppelkörpers bilden sich an der Grenzfläche zwischen Koppelkörper und Schallankoppelfläche bzw. Oberfläche jeweils Filme aus flüssigem Koppelmedium, welche über den Koppelkörper eine Ankopplung des Ultraschallprüfkopfes an den Prüflingen bewerkstelligen. Im Gegensatz zu herkömmlichen Ultraschallprüfvorrichtungen, bei denen der gesamte Raum zwischen Schallankoppelfläche und Oberfläche von flüssigem Medium erfüllt ist, ist bei der vorliegenden Ultraschallprüfvorrichtung dieser Raum größtenteils oder zumindest teilweise vom Koppelkörper erfüllt. Flüssiges Koppelmedium kann also nur aus den aufgeschmolzenen Bereichen zwischen dem nicht oder wesentlich weniger abfließenden Koppelkörper und der Oberfläche bzw. der Ankoppelfläche abfließen, und nicht aus dem gesamten Raum zwischen Ankoppelfläche und Oberfläche, weshalb der Abfluss von Koppelmittel gegenüber herkömmlichen Ultraschallprüfvorrichtungen erheblich reduziert ist.

Da der Koppelkörper abschmelzbar ist, braucht er zunächst in seiner Geometrie nicht an die Oberflächenformen von Schallankoppelfläche und Oberfläche des Prüfling angepasst zu sein. Eine geometrische Anpassung erfolgt durch das Abschmelzen automatisch. Die Prüfvorrichtung passt sich somit auch sich während eines Prüfvorgangs verändernden Oberflächengeometrien, insbesondere der des Prüflings, laufend durch weiteres Abschmelzen an.

Das Abschmelzen des Koppelkörpers kann hierbei z.B. durch eine Temperaturdifferenz zwischen Koppelkörper, Prüfling und Ultra-schallprüfkopf selbständig erfolgen oder durch eine entsprechende Hilfsvorrichtung, wie z.B. eine thermische oder Mikrowellenheizung unterstützt oder verursacht sein.

Aufgrund des geringen Abflusses von Koppelmedium braucht nur ein wesentlich geringerer Vorrat desselben mit der Ultraschallprüfvorrichtung in Form des Koppelkörpers mitgeführt werden.

Der Koppelkörper ist zum Ausgleich seiner Abschmelzung in einer Vorschubrichtung gegen die Schallankoppelfläche und die Oberfläche verschiebbar. Der sich durch Abschmelzung des Koppelkörpers zwischen diesem und der Schallankoppelfläche bzw. Oberfläche vergrößernde mit flüssigem Koppelmedium aufzufüllende Zwischenraum wird durch Vorschub des Koppelkörpers wieder verringert, so dass die Schicht aus flüssigem Koppelmedium möglichst gering bleibt und dadurch der Abfluss von Koppelmedium und dadurch dessen Nachschub auf ein Mindestmaß reduziert ist. Vor allem bei mechanisch festen Koppelkörpern ist der Vorschub durch eine einfache mechanische Führung und einen Vorschub- bzw. Transportmechanismus besonders einfach zu bewerkstelligen.

Flüssiges Koppelmedium kann auch zusätzlich zum abschmelzenden Koppelkörper von außen zwischen diesen und die Oberfläche bzw. Schallankoppelfläche zugeführt werden. Hierbei ist dann wegen der sich aus dem Abschmelzgleichgewicht einstellenden geringen Spaltmaße zwischen Koppelkörper und Oberfläche bzw. Ankoppelfläche nur wenig Raum mit flüssigem Koppelmedium aufzufüllen und damit der Verbrauch an flüssigem Koppelmedium wesentlich reduziert. Die mit der Prüfvorrichtung mitzuführende Bevorratung kann dann in Form von flüssigem Koppelmedium erfolgen oder in Form des abschmelzbaren Koppelkörpers.

Der Koppelkörper kann ein Eisblock sein, welcher zu Wasser als flüssigem Koppelmedium abschmelzbar ist. Ein Koppelkörper aus Eis ist leicht und unaufwendig mit gängiger Technik herstellbar und schmilzt zu Wasser ab, ist also als flüssiges Koppelmedium bekannt, chemisch, umwelt- und kostentechnisch unbedenklich bzw. günstig, nahezu überall verfügbar und einfach zu verarbeiten.

Die Prüfung von überlandverlegten Prüflingen ist mit Wasser bzw. Eis in den meisten Regionen weltweit zu den meisten Jahreszeiten ohne zusätzliche Heizung durchführbar, da bei geeigneter Außentemperatur über dem Schmelzpunkt des Koppelkörpers mit dem Prüfling dessen Oberfläche eine ausreichend hohe Temperatur aufweist, so dass der Koppelkörper ohne Fremdheizung dort abschmilzt. Eis weist außerdem entsprechend üblicherweise als Koppelkörper verwendetem Plexiglas akustisch günstige Parameter für die Schallankopplung vom Ultraschallprüfkopf in den Prüfling auf. Ist als Prüfling Stahl zu untersuchen, so ergibt sich ein geringer Brechungswinkel zwischen Eis und Stahl, was die Fokussierung des vom Ultraschallprüfkopf ausgesandten Ultraschallstrahles und die Festlegung von dessen Einschallrichtung vereinfacht.

Der Koppelkörper kann an der Oberfläche durch die Relativbewegung zur Oberfläche abschmelzbar sein. Dies kann entweder durch entstehende Reibungswärme oder durch eine druckausübende Bewegung des Koppelkörpers zur Oberfläche statt finden. Zusätzliche Hilfsmittel zur Abschmelzung des Koppelkörpers sind dadurch überflüssig, was die Prüfvorrichtung einfacher und kostengünstiger macht.

Die Prüfvorrichtung kann ein den Koppelkörper aus Koppelmedium in Vorschubrichtung erzeugendes Aggregat enthalten. Da sich der Koppelkörper beim Vorschub durch Abschmelzen aufbraucht, wird dieser stets kleiner und ist irgendwann aufgebraucht. Durch das Aggregat wird das Aufbrauchen des Koppelkörpers verhindert, indem dieser z.B. an dem, dem abschmelzenden Ende entgegenliegenden Ende ständig nacherzeugt wird. Außerdem muss der Koppelkörper nicht als solcher mit der Ultraschallprüfvorrichtung mitgeführt werden sondern wird z.B. erst kurz vor Bedarf erzeugt. Das erzeugende Koppelmedium kann hierbei in beliebiger Form, also z.B. fest, flüssig oder gasförmig vorliegen und erst durch das Aggregat in die Form eines Koppelkörpers gebracht werden. Im Beispiel von Eis ist die Bevorratung von Wasser als flüssigem Koppelmedium mit anschließendem Gefrieren unter Umständen einfacher als die Bevorratung des Koppelkörpers in Form von Eis.

Die Schallankoppelfläche und die Oberfläche können zueinander geneigt und der Koppelkörper keilförmig sein. Durch einen keilförmigen Koppelkörper, welcher mit einer Keilseite an der Schallankoppelfläche und mit der anderen Keilseite an der Oberfläche anliegt, kann durch Einstellung des Keilwinkels bzw. des Winkels, mit dem Schallankoppelfläche und Oberfläche zueinander und gegen die Vorschubrichtung des Koppelkörpers geneigt sind, unterschiedliche Abschmelzraten für die Schallankoppelfläche und die Oberfläche des Prüflings erreicht werden. Da z.B. die geometrischen Verhältnisse zwischen Koppelkörper und Schallankoppelfläche bzw. Ultraschallprüfkopf bekannt und während eines Prüfvorgangs unverändert sind, kann dort eine sehr geringe Abschmelzrate genügen, um einen dünnen Film aus flüssigem Koppelmedium zu erhalten. Statt dessen sorgt eine hohe Abschmelzrate an der Oberfläche des Prüflings dafür, dass Unebenheiten, Geometrieschwankungen der Oberfläche des Prüflings durch eine hohe Abschmelzrate und damit genügend zur Verfügung stehendes flüssiges Koppelmedium zuverlässig ohne Abriss des flüssigen Koppelfilms ausgeglichen sind.

Hinsichtlich des Verfahrens wird die der Erfindung zu Grunde liegende Aufgabe gelöst durch ein Ultraschallprüfverfahren, bei dem ein eine Schallankoppelfläche aufweisender Ultraschallprüfkopf auf eine Oberfläche eines Prüflings ausgerichtet wird und entlang der Oberfläche verfahren wird. Zusammen mit dem Ultraschallprüfkopf wird ein zwischen Schallankoppelfläche und Oberfläche angeordneter Koppelkörper entlang der Oberfläche verfahren, wobei der Koppelkörper an der Schallankoppelfläche und der Oberfläche zu einem flüssigen Koppelmedium abgeschmolzen wird. Der Koppelkörper wird zum Ausgleich seiner Abschmelzung in einer Vorschubrichtung gegen die Schallankoppelfläche und die Oberfläche vorgeschoben.

Das erfindungsgemäße Ultraschallprüfverfahren wurde bereits im Zusammenhang mit der erfindungsgemäßen Ultraschallprüfvorrichtung hinsichtlich des Ablaufs und der sich daraus ergebenden Vorteile erläutert.

Vorteilhafte Weiterbildungen des Verfahrens sind den auf den Verfahrenanspruch bezogenen Unteransprüchen zu entnehmen. Die entsprechenden Verfahrensabläufe und die sich daraus ergebenden Vorteile sind ebenfalls im Zusammenhang mit den vorteilhaften Weiterbildungen der erfindungsgemäßen Ultraschallprüfvorrichtung erläutert worden.

Für eine weitere Beschreibung der Erfindung wird auf das Ausführungsbeispiel der Zeichnungen verwiesen. Es zeigen, jeweils in einer schematischen Darstellung:

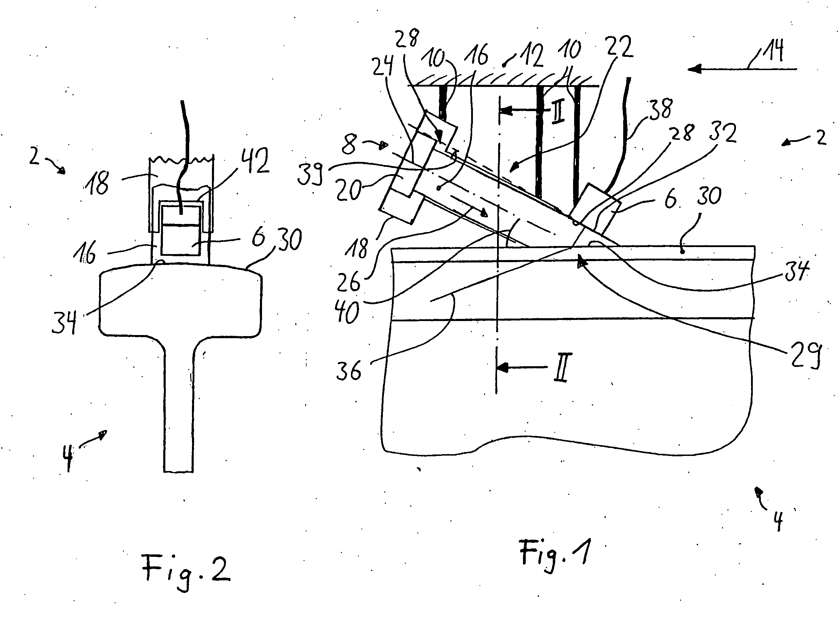

- Fig. 1: eine Ultraschallprüfvorrichtung während der Gleisprü- fung eines Eisenbahngleises,
- Fig.: 2 einen teilweisen Schnitt entlang der Linie II-II durch die Anordnung aus Fig. 1.

Fig. 1 zeigt eine Ultraschallprüfvorrichtung 2 mit einer Schiene 4 einer Eisenbahnstrecke als Prüfling. Die Ulträschallprüfvorrichtung 2 umfasst einen Ultraschallprüfkopf 6 und eine Koppelanordnung 8, welche beide über Träger 10 an der Unterseite eines Schienenprüfzuges 12 montiert sind. Der Schienenprüfzug 12 zusammen mit der Ultraschallprüfvorrichtung 2 ist auf nicht dargestellten Rollen in Prüffahrtrichtung 14 oder Gegenrichtung auf der Schiene 4 verfahrbar.

Die Koppelanordnung 8 umfasst einen Eisblock 16 als Koppelkörper, ein Gehäuse-18 und ein Gefrieraggregat 20. Durch das Gehäuse 18 ist der Eisblock 16 im Bereich 22 entlang seiner Mittellängsachse 24 axial verschiebbar geführt. So kann der Eisblock 16 durch eine nicht dargestellte Vorschubvorrichtung in Vorschubrichtung 26 transportiert werden. Bei Vorschub des Eisblockes 16 in Vorschubrichtung 26 wird dieser an seinem Ende 27 durch das Gefrieraggregat 20 laufend aus nicht dargestelltem Wasser nacherzeugt. Das Gefrieraggregat 20 bildet somit eine Eisquelle, aus welcher sich in Vorschubrichtung 26 ein Eisstrom herausbewegt.

Durch den Vorschub des Eisblocks 16 in Vorschubrichtung 26 wird dieser mit seinem anderen Ende 29 gegen die Schallankoppelfläche 28 des Ultraschallprüfkopfes 6 und die Oberfläche 30 der Schiene 4 gedrückt. Da sowohl die Schallankoppelfläche 28 als auch die Oberfläche 30 über dem Gefrierpunkt des Eisblocks 16 liegende Temperatur besitzen, schmilzt dort der Eisblock 16 zu Wasser ab und bildet dünne Wasserschichten 32 und 34.

Da sich die Lage der Schallankoppelfläche 28 zum Eisblock 16 nicht ändert (abgesehen vom Vorschub des Eisblocks 16), stellt sich an der Schallankoppelfläche 28 eine Temperatur ein, die nur geringfügig über der des Schmelzpunktes des Eisblocks 16 liegt. Hierdurch wird wenig Koppelmedium, also Wasser vom Eisblock 16 abgeschmolzen. Im Gegensatz hierzu bewegt sich der Schienenprüfzug 12 mit etwa 80km/h in Prüfrichtung 14 entlang der Schiene 4 und damit der Eisblock 16 mit der gleichen Geschwindigkeit über die Oberfläche 30. Der Eisblock hat also ständig Kontakt mit Oberfläche 30, die die Außentemperatur der Umgebung, z.B. 20°C aufweist. Die Schiene 4 kühlt also durch den Eisblock 16 nur unwesentlich ab. Deshalb findet an dieser Grenzfläche eine wesentlich stärkere Abschmelzung des Eisblocks 16 statt. Außerdem entsteht durch die Reibung zwischen Eisblock 16 und Oberfläche 30 zusätzlich Wärme, die den Abschmelzvorgang begünstigt.

Ein aus dem Ultraschallprüfkopf 6 ausgesandter Ultraschallstrahl 36 verlässt diesen an der Schallankoppelfläche 28, durchdringt die Wasserschicht 32, den Eisblock 16 und die Wasserschicht 34, wird an der Oberfläche 30 gebrochen und dringt in die Schiene 4 ein. Der von den beiden Wasserschichten 32 und 34 benetzte Eisblock 16 sorgt also für eine lückenlose Ankopplung des Ultraschallprüfkopfes 6 an die Schiene 4. Das von der Schiene 4 reflektierte Ultraschallecho gelangt in entgegengesetzter Richtung von der Schiene 4 zurück zum Ultraschallprüfkopf 6 und wird über eine Signalleitung 38, die auch zur Energieversorgung des Ultraschallprüfkopfes 6 dient, zu einer nicht dargestellten Auswerteeinheit im Schienenprüfzug 12 weitergeleitet.

Da an der Schallankoppelfläche 28 eine relativ geringe Abschmelzung des Eisblocks 16 beabsichtigt ist, ist diese nahezu parallel zur Mittellängsachse 24 des Eisblocks 16 orientiert, so daß der Eisblock in einem sehr spitzen Winkel 39, im gezeigten Beispiel ca. 3°, gegen die Schallankoppelfläche 28 vorgeschoben wird.

Mit der Oberfläche 30 hingegen schließt die Mittellängsachse 24 einen Winkel 40 ein, der ebenfalls spitz, aber wesentlich größer ist, im gezeigten Beispiel ca. 30°. Deshalb kann an der Oberfläche 30 im Vergleich zur Schallankoppelfläche 28 der Eisblöck 16, der in Vorschubrichtung 26 ständig nachgeführt wird, stark abschmelzen. Durch die vergleichsweise große Menge abgeschmolzenen Wassers in der Wasserschicht 34 wird auch zwischen Eisblock 16 und Schiene 4 ein nicht abreißender Wasserfilm 34 bei Prüffahrt des Schienenprüfzugs 12 in Prüfrichtung 14 sichergestellt.

Über die Einstellung der Winkel 39 und 40 erfolgt eine gezielte Einstellung des Einschallwinkels, also des Winkels unter dem der Ultraschallstrahl 36 auf die Schiene 4 trifft. Auch nach einer Verstellung des Winkels 40 durch Kippung der Ultraschallprüfvorrichtung 2 erfolgt durch ungleichmäßige Abschmelzung des Eisblocks 16 wieder eine Anpassung seiner Keilform, so dass sich die dünnen Wasserschichten 32 und 34 wieder einstellen, ohne dass hierzu ein neuer Koppelkörper mit veränderter Geometrie eingesetzt werden müsste. Das vom Eisblock 16 abschmelzende und sich in der Umgebung der Schiene 4 niederschlagende Wasser ist umwelttechnisch und chemisch unbedenklich und führt zu keinerlei Verschmutzung oder ähnlichem der zu untersuchenden Schienenstrecke.

Fig. 2 zeigt einen Schnitt durch die Anordnung aus Fig. 1 entlang der Linie II-II, wobei die Ultraschallprüfvorrichtung 2 nur teilweise, nämlich mit dem Ultraschallprüfkopf 6, dem Eisblock 16 und dem Gehäuse 18 dargestellt ist. Damit der Ultraschallprüfkopf 6 ungehinderten Kontakt mit dem Eisblock 16 hat, ist das Gehäuse 18 an dieser Stelle mit einem Ausschnitt 42 versehen.

In Fig. 2 ist zu sehen, daß die Schiene 4 an ihrer Oberfläche 30 gewölbt ist. Dieser Wölbung passt sich der Eisblock 16 durch Abschmelzen an, so dass eine ebenfalls gewölbte Wasserschicht 34 entsteht. Hierdurch fließt wegen der sich einstellenden geringen Spaltbreite der Wasserschicht 34 weiterhin nur wenig Wasser aus der Wasserschicht 34 zwischen Eisblock 16 und Schiene 4 ab, was bei einem starren, sich nicht veränderten, da nicht abschmelzenden Koppelkörper nicht möglich wäre. Die Wasserschicht 34 wäre wesentlich größer oder nicht an die Geometrie der Schiene 4 angepasst und es würde wesentlich mehr Wasser in die Umgebung abfließen, welches vom Schienenprüfzug 12 mitgeführt werden müsste. Durch,den Eisblock 16 erfolgt also auch hier eine automatische Anpassung an die Geometrie des Prüflings, also der Schiene 4.

## Patentansprüche

1. Ultraschallprüfvorrichtung, mit einem, eine Schallankoppelfläche (28) aufweisenden, auf eine Oberfläche (30) eines Prüflings (4) ausgerichteten und entlang der Oberfläche (30) verfahrbaren Ultraschallprüfkopf (6), **gekennzeichnet durch** einen zwischen der Schallankoppelfläche (28) und der Oberfläche (30) angeordneten, zusammen mit dem Ultraschallprüfkopf (6) verfahrbaren, an der Schallankoppelfläche (28) und der Oberfläche (30) zu einem während der Ultraschallprüfung flüssigen Koppelmedium (32,34) abschmelzbaren Koppelkörper (16), bei der der Koppelkörper (16) zum Ausgleich seiner Abschmelzung in einer Vorschubrichtung (26) gegen die Schallankoppelfläche (28) und die Oberfläche (30) verschiebbar ist.

2. Prüfvorrichtung nach Anspruch 1, mit einer Zuführung für flüssiges Koppelmedium zwischen Koppelkörper und Schallankoppelfläche oder Oberfläche.

3. Prüfvorrichtung nach Anspruch 1 oder 2, bei der der Koppelkörper (16) ein zu Wasser als flüssigem Koppelmedium (32,34) abschmelzbarer Eisblock ist.

4. Prüfvorrichtung nach einem der vorhergehenden Ansprüche, bei der der Koppelkörper (16) an der Oberfläche (30) durch die Relativbewegung (14) zur Oberfläche (30) abschmelzbar ist.

5. Prüfvorrichtung nach einem der vorhergehenden Ansprüche, mit einem den Koppelkörper (16) aus Koppelmedium in Vorschubrichtung (26) erzeugenden Aggregat (20).

6. Prüfvorrichtung nach einem der vorhergehenden Ansprüche, bei der die Schallankoppelfläche (28) und die Oberfläche (30) zueinander geneigt sind und der Koppelkörper (16) keilförmig ist.

7. Ultraschallprüfverfahren, bei dem ein eine Schallankoppelfläche (28) aufweisender Ultraschallprüfkopf (6) auf eine Oberfläche (30) eines Prüflings (4) ausgerichtet wird und zusammen mit dem Ultraschallprüfkopf (6) ein zwischen Schallankoppelfläche (28) und Oberfläche (30) angeordneter Koppelkörper (16) entlang der Oberfläche (30) verfahren wird, wobei der Koppelkörper (16) an der Schallankoppelfläche (28) und der Oberfläche (30) während der Ultraschallprüfung zu einem flüssigen Koppelmedium (32,34) abgeschmolzen wird und der Koppelkörper (16) zum Ausgleich seiner Abschmelzung in einer Vorschubrichtung (26) gegen die Schallankoppelfläche (28) und die Oberfläche (30) vorgeschoben wird.

8. Prüfverfahren nach Anspruch 7, bei dem flüssiges Koppelmedium zwischen Koppelkörper und Schallankoppelfläche oder Oberfläche zugeführt wird.

9. Prüfverfahren nach Anspruch 7 oder 8, bei dem als Koppelkörper (16) ein Eisblock zu Wasser als flüssigem Koppelmedium (32,34) abgeschmolzen wird.

10. Prüfverfahren nach einem der Ansprüche 7 bis 9, bei dem der Koppelkörper (16) durch die Bewegung relativ zur Oberfläche (30) an dieser abgeschmolzen wird.

11. Prüfverfahren nach einem der Ansprüche 7 bis 10, bei dem der Koppelkörper (16) in Vorschubrichtung (26) von einem Aggregat (20) aus Koppelmedium erzeugt wird.

## Claims

1. Ultrasonic testing device, with an ultrasonic testing head (6), having a sound coupling surface (28), aligned on a surface (30) of a test object (4) and capable of being moved along the surface (30), **characterised by** a coupling body (16) arranged between the sound attachment surface (28) and the surface (30), capable of being moved together with the ultrasonic test head (6), and capable of being melted on the sound coupling surface (28) and the surface (30) to form a coupling medium (32, 34) which is fluid during the ultrasonic test, wherein the coupling body (16) can be displaced in order to compensate its melting effect in a direction of thrust (26) against the sound coupling surface (28) and the surface (30).

2. Testing device according to Claim 1, with a delivery line for fluid coupling medium between the coupling body and the sound coupling surface or surface.

3. Testing device according to Claim 1 or 2, in which the coupling body (16) is an ice block capable of melting to water as the fluid coupling medium (32, 34).

4. Testing device according to any one of the preceding claims, in which the coupling body (16) is capable of melting on the surface (30) by the relative movement (14) in relation to the surface (30).

5. Testing device according to any one of the preceding claims, with a device (20) producing the coupling body (16) from the coupling medium in the thrust direction (26).

6. Testing device according to any one of the preceding claims, in which the sound coupling surface (28) and the surface (30) are inclined towards each other and the coupling body (16) is wedge-shaped.

7. Ultrasonic test method, in which an ultrasonic test head (6), having a sound coupling surface (28) is aligned on a surface (30) of a test object (4) and, together with the ultrasonic test head (6), a coupling body (16), arranged between the sound coupling surface (28) and surface (30), is moved along the surface (30), wherein the coupling body (16) is melted on the sound coupling surface (28) and the surface (30) during the ultrasonic test to form a fluid coupling medium (32, 34) and the coupling body (16), in order to compensate for its melting, is pushed in a thrust direction (26) against the sound coupling surface (28) and the surface (30).

8. Test method according to Claim 7, in which a fluid coupling medium is introduced between the coupling body and the sound coupling surface or surface.

9. Test method according to Claim 7 or 8, in which an ice block, as a coupling body (16), is melted to water as a fluid coupling medium (32, 34).

10. Test method according to any one of Claims 7 to 9, in which the coupling body (16) is melted onto the surface (30) due to the movement relative to it.

11. Test method according to any one of Claims 7 to 10, in which the coupling body (16) is produced by a device (20) from the coupling medium in the thrust direction (26).

## Revendications

1. Dispositif de contrôle par ultrasons comprenant une tête (6) de contrôle par ultrasons qui a une face (28) de couplage du son, qui est dirigée sur une surface (30) d'un échantillon et qui peut être déplacé le long de la surface (30), **caractérisé par** une pièce (16) de couplage qui est disposée entre la face (28) de couplage du son et la surface (30), qui peut être déplacée ensemble avec la tête (6) de contrôle par ultrasons et qui peut être fondue sur la face (28) de couplage du son et sur la surface (30) en un milieu (32, 34) liquide de couplage pendant le contrôle par ultrasons, dans lequel la pièce de couplage peut, pour compenser sa fusion, être déplacée dans une direction (26) d'avance vers la face (28) de couplage du son et la surface (30).

2. Dispositif de contrôle suivant la revendication 1, comprenant une avance pour du milieu liquide de couplage entre la pièce de couplage et la face de couplage du son ou la surface.

3. Dispositif de contrôle suivant la revendication 1 ou 2, dans lequel la pièce (16) de couplage est un bloc de glace pouvant être fondu en de l'eau en tant que milieu (32, 34) liquide de couplage.

4. Dispositif de contrôle suivant l'une des revendications précédentes, dans lequel la pièce (16) de couplage peut être fondue sur la surface (30) par le mouvement (14) relatif par rapport à la surface (30).

5. Dispositif de contrôle suivant l'une des revendications précédentes, comprenant un ensemble (20) produisant dans la direction (26) d'avance la pièce (16) de couplage en le milieu de couplage.

6. Dispositif de contrôle suivant l'une des revendications précédentes, dans lequel la face (28) de couplage du son et la surface (30) sont inclinées l'une par rapport à l'autre et la pièce (16) de couplage est cunéiforme.

7. Procédé de contrôle par ultrasons dans lequel on dirige une tête (6) de contrôle par ultrasons ayant une face (28) de couplage du son, sur une surface (30) d'un échantillon (4) et on déplace le long de la surface (30), ensemble avec la tête (6) de contrôle par ultrasons, une pièce (16) de couplage disposée entre la face (28) de couplage du son et la surface (30), la pièce (16) de couplage étant fondue sur la face (28) de couplage du son et la surface (30) pendant le contrôle par ultrasons en un milieu (32, 34) liquide de couplage et la pièce (16) de couplage étant avancée pour compenser sa fusion dans une direction (26) d'avance sur la face (28) de couplage du son et sur la surface (30).

8. Procédé de contrôle suivant la revendication 7, dans lequel on met du milieu liquide de couplage entre la pièce de couplage et la face de couplage du son ou la surface.

9. Procédé de contrôle suivant la revendication 7 ou 8, dans lequel on fait fondre comme pièce (16) de couplage un bloc de glace en eau servant de milieu (32, 34) du liquide de couplage.

10. Procédé de contrôle suivant l'une des revendications 7 à 9, dans lequel on fait fondre sur la surface (30) la pièce (16) de couplage par mouvement relatif par rapport à cette surface.

11. Procédé de contrôle suivant l'une des revendications 7 à 10, dans lequel on produit la pièce (16) de couplage dans la direction (26) d'avance par un ensemble (20) en du milieu de couplage.
